# EUROPEAN PATENT SPECIFICATION

(11) **EP 2 741 391 B1**
(45) Date of publication and mention of the grant of the patent: **26.02.2020**
(21) Application number: 12841002.4
(22) Date of filing: 18.10.2012
(51) Int. Cl.: H01M 2/34, H02J 7/00, H01M 2/20

(54) **BATTERY PACK WITH IMPROVED SAFETY**
BATTERIEPACK MIT VERBESSERTER SICHERHEIT
BLOC-BATTERIE PRÉSENTANT UNE SÉCURITÉ AMÉLIORÉE

(30) Priority: 20.10.2011 KR 20110107259
(43) Date of publication of application: 11.06.2014
(73) Proprietor: LG Chem, Ltd., Seoul 150-721 (KR)
(72) Inventor: LEE, Jin Kyu, Daejeon 305-380 (KR); CHOI, JunSeok, Daejeon 305-380 (KR); ROH, TaeHwan, Daejeon 305-380 (KR); KIM, SeongTae, Daejeon 305-380 (KR); KIM, TaeHyuck, Daejeon 305-380 (KR)
(74) Representative: Plasseraud IP
(86) International application number: PCT/KR2012/008508
(87) International publication number: WO 2013/058558

(56) References cited:
- EP-A1- 2 284 929
- EP-A1- 2 357 685
- JP-A- 2000 123 887
- JP-A- 2005 183 176
- KR-A- 20110 017 778
- KR-B1- 100 521 477
- KR-B1- 100 591 430

## Description

### [TECHNICAL FIELD]

The present invention relates to a battery pack with improved safety and, more particularly, to a battery pack including a power supply unit including battery cells or battery modules electrically connected to each other, a pressure driven switch, a cut-off portion to interrupt electrical connection in the battery pack upon occurrence of a short circuit of the battery cells or the battery modules guided by the pressure driven switch, and external input and output terminals to supply power to an external device.

### [BACKGROUND ART]

As mobile devices have been increasingly developed and the demand for such mobile devices has increased, the demand for secondary batteries has sharply increased as an energy source for the mobile devices. Among such secondary batteries is a lithium secondary battery having high energy density and discharge voltage, into which much research has been carried out and which is now commercialized and widely used.

A secondary battery has attracted considerable attention as an energy source for power-driven devices, such as an electric bicycle (E-bike), an electric vehicle (EV), and a hybrid electric vehicle (HEV), as well as an energy source for mobile wireless electronic devices, such as a mobile phone, a digital camera, a personal digital assistant (PDA), and a laptop computer.

A small-sized battery pack, in which a battery cell is mounted, is used for small-sized devices, such as a mobile phone and a digital camera. On the other hand, a middle or large-sized battery pack, in which a battery pack including two or more battery cells (hereinafter, also referred to as a "multi-cell") connected to each other in parallel and/or in series is mounted, is used for middle or large-sized devices, such as a laptop computer and an electric vehicle.

A lithium secondary battery exhibits excellent electrical properties, such as large capacity and high discharge voltage; however, the lithium secondary battery has low safety. For example, when abnormal operations, such as overcharge, overdischarge, exposure to high temperature, and an electrical short circuit, of the lithium secondary battery occur, decomposition of active materials and an electrolyte, which are components of the battery, is caused with the result that heat and gas are generated and the high-temperature and highpressure conditions caused by generation of the heat and the gas accelerate the above-mentioned decomposition. Eventually, a fire or explosion may occur.

For this reason, the lithium secondary battery is provided with a safety system, such as a protection circuit to interrupt electric current when the battery is overcharged or overdischarged or when overcurrent flows in the battery, a positive temperature coefficient (PTC) element whose resistance greatly increases so as to interrupt electric current when the temperature of the battery increases, and a safety vent to interrupt electric current or to exhaust gas when pressure increases due to generation of the gas. In case of a small-sized cylindrical secondary battery, for example, the PTC element and the safety vent are usually disposed at the top of an electrode assembly (a generating element) having a cathode/separator/anode structure, which is mounted in a cylindrical container. In case of a small-sized prismatic or pouch-shaped secondary battery, on the other hand, the protection circuit module and the PTC element are usually mounted at the upper end of a prismatic container or a pouch-shaped case, in which the generating element is mounted in a sealed state.

The safety-related problem of the lithium secondary battery is even more serious for a middle or large-sized battery pack having a multi-cell structure. Since a plurality of battery cells is used in the multi-cell battery pack, abnormal operation of some of the battery cells may cause abnormal operation of the other battery cells with the result that a fire or explosion may occur, which may lead to a large-scale accident. For this reason, the middle or large-sized battery pack is provided with a safety system, such as a battery management system (BMS), to protect the battery cells from overdischarge, overcharge, and overcurrent.

Meanwhile, as the lithium secondary battery is continuously used, i.e. as the lithium secondary battery is repeatedly charged and discharged, the generating element and electrical connection members are gradually degraded. For example, degradation of the generating element leads to decomposition of electrode materials and the electrolyte, by which gas is generated. As a result, the battery cell (the container or the pouch-shaped case) gradually swells. In a normal state of the lithium secondary battery, an active controller, such as the BMS, detects overdischarge, overcharge, or overcurrent of the battery pack. In a case in which the detected overdischarge, overcharge, or overcurrent of the battery pack is excessive, the active controller interrupts electrical connection in the battery pack to lower the risk of the battery pack.

In a case in which the active controller as described above is used, however, it is necessary to supply external electric current to the BMS. If no electric current is supplied to the BMS, therefore, the BMS may not protect the battery pack.

Therefore, there is a high necessity for technology that is capable of fundamentally securing safety of the battery pack while solving the above problems.

EP 2 284 929 A1 discloses a battery module having rechargeable batteries with connecting members connecting first terminals of neighboring batteries, and a mechanically actuated shorting member generating a short circuit by connecting two neighboring connecting members to each other. The shorting member comprises a movable shorting plate contactable with the neighboring connecting members for inducing the short circuit, and a driver coupled to the shorting plate to move it to contact the neighboring connecting members.

### [DISCLOSURE]

### [TECHNICAL PROBLEM]

The present invention has been made to solve the above problems and other technical problems that have yet to be resolved.

As a result of a variety of extensive and intensive studies and experiments to solve the problems as described above, the inventors of the present application have found that, in a case in which a battery pack includes a pressure driven switch and a cut-off portion, which have specific construction in the battery pack, the pressure driven switch detects expansion in volume of battery cells or battery modules and guides the occurrence of a short circuit in a portion of the battery pack when the battery pack is overcharged and the cut-off portion interrupts electrical connection in the battery pack when such a short circuit intentionally occurs in the battery pack, thereby securing safety of the battery pack to a desired level.

Therefore, it is an object of the present invention to provide a battery pack having a specific structure that is capable of improving safety.

### [TECHNICAL SOLUTION]

In accordance with one aspect of the present invention, the above and other objects can be accomplished by the provision of a battery pack according to the appended claim 1.

In a battery pack configured to have a power supply unit including a plurality of battery cells or battery modules connected to each other, as previously described, a battery management system (BMS) detects an operation state of the power supply unit and controls charge and discharge of the power supply unit based on the detected operation state of the power supply unit, thereby securing safety of the battery pack. In a case in which the BMS does not operate due to interruption in supply of electric current, however, it is not possible to control charge and discharge of the power supply unit.

In the battery pack according to the present invention, on the other hand, electric current flows to an external device, such as a motor of an electric vehicle, having large load in a normal operation state of the battery pack and electric current flows to the pressure driven switch, which has small load, due to the occurrence of an intentionally caused short circuit in an abnormal operation state of the battery pack, such as expansion in volume of the battery cells or the battery modules. As a result, overcurrent flows in the cut-off portion with the result that the cut-off portion is cut off to interrupt electrical connection in the battery pack, thereby securing safety the battery pack. The pressure driven switch and the cut-off portion to secure such safety of the battery pack are configured to operate independently of the BMS. Consequently, it is possible to secure safety of the battery pack even when the BMS does not operate.

In addition, the battery pack according to the present invention may use pressure generated when the battery cells or the battery modules are overcharged. Consequently, it is possible to protect the battery pack from overcharge.

Furthermore, a circuit including the pressure driven switch to cause the occurrence of an intentional short circuit is directly connected to the battery cells or the battery modules at which the cut-off portion is located or is connected adjacent to the battery cells or the battery modules at which the cut-off portion is located. Consequently, the battery pack according to the present invention has the following special effects.

Specifically, in a structure in which the circuit including the pressure driven switch is located at the outermost side of the power supply unit, the circuit may be cut off due to expansion of the battery cells or the battery modules with the result that the entirety of the battery pack may be damaged. On the other hand, the pressure driven switch of the battery pack according to the present invention is connected to or adjacent to the battery cells or the battery modules at which the cut-off portion is located, thereby solving the above problems. In addition, only some of the battery cells or the battery modules constituting the battery pack are short-circuited with the result that the damaged portion of the battery pack may be replaced.

Furthermore, the battery pack according to the present invention is configured by adding the pressure driven switch and the cut-off portion to the conventional battery pack without great change in structure of the battery pack. Consequently, the battery pack according to the present invention may be configured to have a safe structure. In addition, the circuit has a short length, thereby improving flexibility in design of the battery pack.

The battery cells or the battery modules may be short-circuited in various manners based on characteristics of the battery cells or the battery modules. A short circuit current necessary to operate the cut-off portion may be 500A to 3000A.

The cut-off portion is not particularly restricted so long as the cut-off portion easily interrupts electrical connection in the battery pack when a short circuit occurs in the battery pack. For example, the cut-off portion may be a fuse.

In a preferred example, the pressure driven switch may be configured to operate when the expansion in volume of the battery cells or the battery modules exceeds a predetermined value.

The predetermined value may be arbitrarily decided based on the structure or capacity of the battery pack. If the predetermined value is too small, the pressure driven switch may too sensitively respond to the expansion in volume of the battery cells or the battery modules, which is not preferable. On the other hand, if the predetermined value is too large, the pressure driven switch may too insensitively respond to the expansion in volume of the battery cells or the battery modules which is also not preferable. For example, the predetermined value may be set to 1 to 30 % the volume of the battery cells or the battery modules.

The pressure driven switch may be set to an electrical cut-off state (OFF) under normal operation conditions of the battery cells or the battery modules and may be switched to an electrical conduction state (ON) when the volume of the battery cells or the battery modules expands.

Specifically, the pressure driven switch is set to the electrical cut-off state under normal operation conditions of the battery cells or the battery modules. Consequently, electric current generated by the power supply unit is supplied only to the external device such that the external device is driven.

Under abnormal operation conditions of the battery cells or the battery modules, on the other hand, the volume of the battery cells or the battery modules expands to switch the pressure driven switch to the electrical conduction state. Due to such electrical conduction, the occurrence of an intentional short circuit is caused by the cut-off portion connected to some of the battery cells or the battery modules with the result that the supply of electric current from the power supply unit to the external device is interrupted.

The expansion in volume of the battery cells or the battery modules may be caused by various factors, such as overcharge of the power supply unit and overcurrent in the power supply unit. For example, a swelling phenomenon, in which the battery cells or the battery modules swell, may occur due to overcharge of the power supply unit, overcurrent in the power supply unit, abnormal operation of the battery pack, or degradation of the battery pack caused as the result of charge and discharge for a long period of time. Safety of the battery pack according to the present invention is improved under such conditions.

Electrode terminals of the battery cells or the battery modules may be directly connected to each other or may be electrically connected to each other via bus bars. However, the present invention is not limited thereto.

The shape of each of the battery cells is not particularly restricted. Each of the battery cells may be a cylindrical battery cell, a prismatic battery cell, or a pouch-shaped battery cell. For example, each of the battery cells may be a pouch-shaped battery cell having an electrode assembly mounted in a case formed of a laminate sheet including a resin layer and a metal layer. Preferably, each of the battery cells is a pouch-shaped lithium secondary battery.

The battery pack according to the present invention may be manufactured by combining battery modules based on desired output and capacity. The battery pack according to the present invention may be used as a power source for an electric vehicle, a hybrid electric vehicle, a plug-in hybrid electric vehicle, or a power storage device in consideration of installation efficiency and structural stability. However, an applicable range of the battery pack according to the present invention is not limited thereto.

In accordance with another aspect of the present invention, therefore, there is provided a device including the battery pack with the above-stated construction as a power source. Specifically, the device may be an electric vehicle, a hybrid electric vehicle, a plug-in hybrid electric vehicle, or a power storage device.

### [DESCRIPTION OF DRAWINGS]

The above and other objects, features and other advantages of the present invention will be more clearly understood from the following detailed description taken in conjunction with the accompanying drawings, in which:
FIG. 1 is a view showing construction of a battery pack according to an embodiment of the present invention; and
FIG. 2 is a view showing construction of a battery pack according to another embodiment of the present invention.

### [BEST MODE]

Now, exemplary embodiments of the present invention will be described in detail with reference to the accompanying drawings. It should be noted, however, that the scope of the present invention is not limited by the illustrated embodiments.

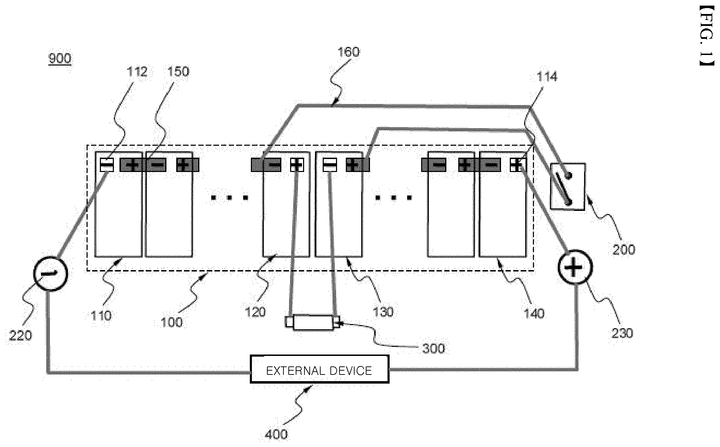

FIG. 1 is a view typically showing construction of a battery pack according to an embodiment of the present invention.

Referring to FIG. 1, a battery pack 900 includes a power supply unit 100 including a plurality of battery modules 110, 120, 130, and 140 electrically connected to one another, a pressure driven switch 200, a cut-off portion 300, and a pair of external input and output terminals 220 and 230 electrically connected to an external device 400.

The pressure driven switch 200 is connected in parallel to the battery modules 120 and 130 and the cut-off portion 300 is located at a series connection region between the battery modules 120 and 130.

The cut-off portion 300, such as a fuse, is located at the series connection region between the battery modules 120 and 130, which are located at the middle part of the battery pack and the pressure driven switch 200 is directly electrically connected to the battery modules 120 and 130, to which the cut-off portion 300 is connected.

The external input and output terminals 220 and 230 are respectively electrically connected to an anode terminal 112 and a cathode terminal 114 of the battery modules 110 and 140 located at the outermost sides of the power supply unit 100 to supply power to the external device 400.

Electrode terminals of the battery modules 110, 120, 130, and 140 are electrically connected to one another via bus bars 150.

When the expansion in volume of the battery modules exceeds a predetermined value, a state of the pressure driven switch 200 is switched from an electrical cut-off state to an electrical conduction state.

Specifically, the pressure driven switch 200 is set to the electrical cut-off state (OFF) under normal operation conditions of the battery modules 120 and 130. When the volume of the battery modules 120 and 130 expands under electrical conduction conditions, such as overcharge or overcurrent, of the power supply unit 100, the pressure driven switch 200 detects the expansion in volume of the battery modules 120 and 130 and is switched to the electrical conduction state (ON).

That is, when the power supply unit 100 is in a normal state, electric current generated by the power supply unit 100 normally flows to the external device, which is large load, since the pressure driven switch 200 is set to the electrical cut-off state (OFF).

When the power supply unit 100 is in an abnormal state, however, the battery modules of the power supply unit 100 swell. At this time, the pressure driven switch 200 detects the expansion in volume of the battery modules and is switched to the electrical conduction state.

In this case, much more electric current abruptly flows to the fuse 300, which is a resistance body having small load, than to the external device 400, which is large load. Heat is generated from the fuse 300 due to the electric current abruptly supplied to the fuse 300 with the result that the fuse 300 is cut off. Due to cut-off of the fuse 300, charge and discharge of some of the battery modules are interrupted, thereby securing safety of the battery pack 900.

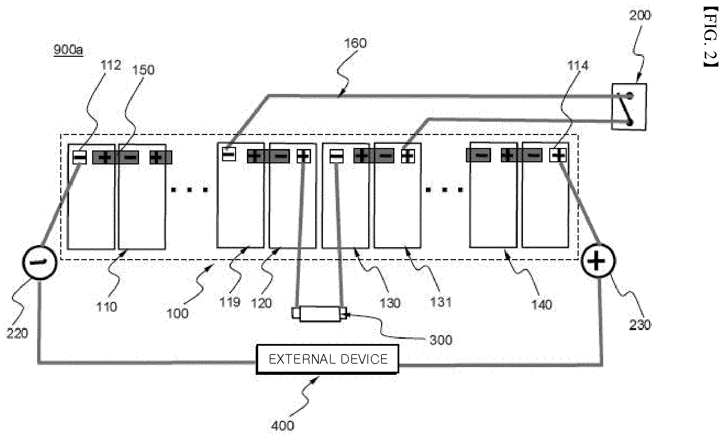

FIG. 2 is a view showing construction of a battery pack according to another embodiment of the present invention.

Referring to FIG. 2 together with FIG. 1, a battery pack 900a is identical in structure to the battery pack 900 of FIG. 1 except that a pressure driven switch 200 of the battery pack 900a is electrically connected to battery modules 119 and 131 adjacent to battery modules 120 and 130, to which a cut-off portion 300 is connected.

That is, the pressure driven switch 200 is connected to the battery modules at a position adjacent to the cut-off portion 300 such that some of the battery modules of the battery pack 900 or 900a is short-circuited. Consequently, it is possible to greatly reduce risk which may be caused due to occurrence of a short circuit and to flexibly design overall circuitry of the battery pack.

In the present invention, therefore, a case in which the pressure driven switch is electrically connected to the battery cells or the battery modules at which the cut-off portion is located includes a case in which the pressure driven switch is directly connected to the battery cells or the battery modules at which the cut-off portion is located and a case in which the pressure driven switch is connected adjacent to the battery cells or the battery modules at which the cut-off portion is located. For example, the pressure driven switch may be adjacent to the battery cells or the battery modules by a distance equivalent to one to five battery cells or battery modules.

Although the exemplary embodiments of the present invention have been disclosed for illustrative purposes, those skilled in the art will appreciate that various modifications, additions and substitutions are possible according to the accompanying claims.

### [INDUSTRIAL APPLICABILITY]

As is apparent from the above description, a pressure driven switch of a battery pack according to the present invention is connected to or adjacent to battery cells or battery modules at which a cut-off portion is located. In the event of abnormal operation of the battery pack, therefore, the pressure driven switch detects expansion in volume of the battery cells or the battery modules and guides the occurrence of a short circuit in some of the battery modules. When such a short circuit intentionally occurs in the battery pack, the cut-off portion interrupts electrical connection in the battery pack. Consequently, it is possible to greatly improve safety of the battery pack.

In addition, the battery pack according to the present invention includes a cut-off portion that is capable of interrupting electrical connection in the battery pack in response to an operation state of a power supply unit independently of a battery management system (BMS). Even in a case in which the BMS does not operate, therefore, it is possible to secure safety of the battery pack, thereby greatly improving reliability of the battery pack.

Furthermore, the pressure driven switch and the cut-off portion may be mounted in an inner space of the battery pack. Consequently, it is possible to easily manufacture the battery pack without changing the structure of the battery pack.

## Claims

1. A battery pack comprising:
a power supply unit (100) comprising four or more battery cells or battery modules (110, 120, 130, 140) electrically connected to each other;
a pressure driven switch (200);
a cut-off portion (300) located at at least one series connection region between the battery cells or the battery modules to interrupt electrical connection in the battery pack upon occurrence of a short circuit of the battery cells or the battery modules guided by the pressure driven switch (200); and
external input and output terminals (220, 230) connected to electrode terminals located at outermost sides of the power supply unit (100) to supply power to an external device (400), **characterized in that** the pressure driven switch (200) is electrically connected in parallel to the battery cells or battery modules at which the cut-off portion (300) is located, or to the battery cells or battery modules adjacent to the battery cells or battery modules at which the cut-off portion (300) is located to detect expansion in volume of the battery cells or battery modules when the power supply unit (100) malfunctions and to guide occurrence of a short circuit of the battery cells or battery modules.

2. The battery pack according to claim 1, wherein a short circuit current necessary to operate the cut-off portion (300) is 500A to 3000A.

3. The battery pack according to claim 1, wherein the cut-off portion (300) comprises a fuse.

4. The battery pack according to claim 1, wherein the pressure driven switch (200) is configured to operate when the expansion in volume of the battery cells or the battery modules exceeds a predetermined value.

5. The battery pack according to claim 1, wherein the pressure driven switch (200) is set to an electrical cut-off state (OFF) under normal operation conditions of the battery cells or the battery modules and is switched to an electrical conduction state (ON) when the volume of the battery cells or the battery modules expands.

6. The battery pack according to claim 1, wherein the expansion in volume of the battery cells or the battery modules is caused when the power supply unit (100) is overcharged or overcurrent flows in the power supply unit (100).

7. The battery pack according to claim 1, wherein electrode terminals of the battery cells or the battery modules are electrically connected to each other via bus bars (150).

8. The battery pack according to claim 1, wherein each of the battery cells is a pouch-shaped battery cell having an electrode assembly mounted in a case formed of a laminate sheet comprising a resin layer and a metal layer.

9. A device comprising a battery pack according to claim 1 as a power source.

10. The device according to claim 9, wherein the device is an electric vehicle, a hybrid electric vehicle, a plug-in hybrid electric vehicle, or a power storage device.

## Patentansprüche

1. Batteriepack, umfassend:
eine Leistungsversorgungseinheit (100), umfassend vier oder mehr Batteriezellen oder Batteriemodule (110, 120, 130, 140), welche elektrisch miteinander verbunden sind;
einen druckbetriebenen Schalter (200);
einen Abschalt-Abschnitt (300), welcher an wenigstens einem Reihen-Verbindungsabschnitt zwischen den Batteriezellen oder den Batteriemodulen angeordnet ist, um eine elektrische Verbindung in dem Batteriepack auf ein Auftreten eines Kurzschlusses der Batteriezellen oder der Batteriemodule hin zu unterbrechen, welcher durch den druckbetriebenen Schalter (200) geführt wird; und
externe Eingabe- und Ausgabeanschlüsse (220, 230), welche mit Elektrodenanschlüssen verbunden sind, welche an äußersten Seiten der Leistungsversorgungseinheit (100) angeordnet sind, um Leistung an eine externe Vorrichtung (400) zu liefern,
**dadurch gekennzeichnet, dass** der druckbetriebene Schalter (200) mit den Batteriezellen oder Batteriemodulen, an welchen der Abschalt-Abschnitt (300) angeordnet ist, oder mit den Batteriezellen oder Batteriemodulen parallel elektrisch verbunden ist, welche den Batteriezellen oder Batteriemodulen benachbart sind, an welchen der Abschalt-Abschnitt (300) angeordnet ist, um ein Ausdehnen eines Volumens der Batteriezellen oder Batteriemodule zu erfassen, wenn die Leistungsversorgungseinheit (100) fehlerhaft arbeitet, und ein Auftreten eines Kurzschlusses der Batteriezellen oder Batteriemodule zu führen.

2. Batteriepack nach Anspruch 1, wobei ein Kurzschluss-Strom, welcher notwendig ist, um den Abschalt-Abschnitt (300) zu betätigen, 500 A bis 3000 A beträgt.

3. Batteriepack nach Anspruch 1, wobei der Abschalt-Abschnitt (300) eine Sicherung umfasst.

4. Batteriepack nach Anspruch 1, wobei der druckbetriebene Schalter (200) dazu eingerichtet ist, zu arbeiten, wenn die Ausdehnung eines Volumens der Batteriezellen oder der Batteriemodule einen vorbestimmten Wert überschreitet.

5. Batteriepack nach Anspruch 1, wobei der druckbetriebene Schalter (200) auf einen elektrischen Abschalt-Zustand (OFF) unter normalen Betriebsbedingungen der Batteriezellen oder der Batteriemodule festgelegt ist und auf einen elektrischen Leitungszustand (ON) geschaltet wird, wenn sich das Volumen der Batteriezellen oder der Batteriemodule ausdehnt.

6. Batteriepack nach Anspruch 1, wobei die Ausdehnung eines Volumens der Batteriezellen oder der Batteriemodule hervorgerufen wird, wenn die Leistungsversorgungseinheit (100) überladen wird oder ein Überstrom in der Leistungsversorgungseinheit (100) fließt.

7. Batteriepack nach Anspruch 1, wobei Elektrodenanschlüsse der Batteriezellen oder der Batteriemodule miteinander über Sammelschienen (150) elektrisch verbunden sind.

8. Batteriepack nach Anspruch 1, wobei jede der Batteriezellen eine beutelförmige Batteriezelle ist, welche eine Elektrodenanordnung aufweist, welche in einem Gehäuse angebracht ist, welches aus einer Laminatbahn gebildet ist, welche eine Harzschicht und eine Metallschicht umfasst.

9. Vorrichtung, umfassend einen Batteriepack nach Anspruch 1 als eine Leistungsquelle.

10. Vorrichtung nach Anspruch 9, wobei die Vorrichtung ein elektrisches Fahrzeug, ein elektrisches Hybridfahrzeug, ein elektrisches Plug-in-Hybridfahrzeug oder eine Energiespeichervorrichtung ist.

## Revendications

1. Bloc-batterie comprenant :
une unité d'alimentation en puissance (100) comprenant quatre ou plus de quatre cellules de batterie ou modules de batterie (110, 120, 130, 140) connectés électriquement les uns aux autres ;
un commutateur entraîné par pression (200) ;
une portion coupée (300) située au niveau d'au moins une zone de connexion en série entre les cellules de batterie ou modules de batterie pour interrompre une connexion électrique dans le bloc-batterie au moment de la survenue d'un court-circuit des cellules de batterie ou des modules de batterie guidés par le commutateur entraîné par pression (200) ; et
des bornes d'entrée et de sortie externes (220, 230) connectées à des bornes d'électrode situées au niveau de côtés les plus extérieurs de l'unité d'alimentation en puissance (100) pour alimenter en puissance un dispositif externe (400),
**caractérisé en ce que** le commutateur entraîné par pression (200) est connecté électriquement en parallèle aux cellules de batterie ou modules de batterie au niveau desquels la portion coupée (300) est située, ou aux cellules de batterie ou modules de batterie adjacents aux cellules de batterie ou modules de batterie au niveau desquels la portion coupée (300) est située, pour détecter une expansion en volume des cellules de batterie ou modules de batterie lorsque l'unité d'alimentation en puissance (100) fonctionne mal et pour guider la survenue d'un court-circuit des cellules de batterie ou modules de batterie.

2. Bloc-batterie selon la revendication 1, dans lequel un courant de court-circuit nécessaire pour faire fonctionner la portion coupée (300) est de 500 A à 3000 A.

3. Bloc-batterie selon la revendication 1, dans lequel la portion coupée (300) comprend un fusible.

4. Bloc-batterie selon la revendication 1, dans lequel le commutateur entraîné par pression (200) est configuré pour fonctionner lorsque l'expansion en volume des cellules de batterie ou modules de batterie dépasse une valeur prédéterminée.

5. Bloc-batterie selon la revendication 1, dans lequel le commutateur entraîné par pression (200) est réglé sur un état de coupure électrique (OFF) dans des conditions de fonctionnement normales des cellules de batterie ou des modules de batterie et est commuté sur un état de conduction électrique (ON) lorsque le volume des cellules de batterie ou des modules de batterie se dilate.

6. Bloc-batterie selon la revendication 1, dans lequel l'expansion en volume des cellules de batterie ou des modules de batterie est provoquée lorsque l'unité d'alimentation en puissance (100) est surchargée ou lorsqu'une surintensité circule dans l'unité d'alimentation en puissance (100).

7. Bloc-batterie selon la revendication 1, dans lequel des bornes d'électrode des cellules de batterie ou des modules de batterie sont connectées électriquement les unes aux autres via des barres omnibus (150).

8. Bloc-batterie selon la revendication 1, dans lequel chacune des cellules de batterie est une cellule de batterie en forme de poche présentant un assemblage d'électrodes monté dans un boîtier constitué d'une feuille stratifiée comprenant une couche de résine et une couche de métal.

9. Dispositif comprenant un bloc-batterie selon la revendication 1 en tant que source de puissance.

10. Dispositif selon la revendication 9, dans lequel le dispositif est un véhicule électrique, un véhicule électrique hybride, un véhicule électrique hybride rechargeable ou un dispositif de stockage de puissance.
